# EUROPEAN PATENT SPECIFICATION

(11) **EP 0 664 961 B1**
(45) Date of publication and mention of the grant of the patent: **18.08.1999**
(21) Application number: 95850007.6
(22) Date of filing: 11.01.1995
(51) Int. Cl.: A23K 1/00, A23N 17/00, A23P 1/02

(54) **Process for the preparation of fish feed pellets, a fish pellet, and an apparatus for extruding fish feed**
Verfahren zur Aufbereitung von Fischfutterkügelchen, solches Kügelchen, und Vorrichtung zur Extrusion des Fischfutters
Procédé de préparation de boulettes de nourriture, pour poissons, une telle boulette, et appareil pour extruder la nourriture pour poissons

(30) Priority: 28.01.1994 FI 44194
(43) Date of publication of application: 02.08.1995
(73) Proprietor: Ewos Limited, Bathgate EH48 3BP (GB)
(72) Inventor: Partio, Pasi, SF-47520 Iitti (FI)
(74) Representative: Pattullo, Norman

(56) References cited:
- EP-A- 0 331 207
- EP-A- 0 396 199
- EP-A- 0 579 095
- DE-A- 3 345 407
- FR-A- 2 317 089
- GB-A- 2 241 862
- SU-A- 1 708 263
- US-A- 4 900 572
- US-A- 4 937 089
- US-A- 4 971 820

## Description

The present invention relates to a process for the preparation of fish feed pellets, a fish feed pellet, as well as an apparatus for extruding fish feed.

### Background of the invention

Fish feed pellets used in fish farming are predominantly produced today by means of an extruder. In such operations the feed raw materials are mixed together, the mixture is forced through a perforated die in the form a continous string and the string is cut into pieces of the desired length. The diameter of the string is determined by the perforations of the die. The resulting pieces are further processed to produce a pelletized fish feed product. The die used in the extruder comprises perforations having a circular shape, whereby the pellets thus obtained will be cylindrical.

Since the fish is farmed, using a fish feed product, starting with fingerlings (having the weight of about 1 g) up to large fish having a weight of several kilogrammes (e.g. 4 to 5 kgs) various pellet sizes are required and used in the feeding at different stages of the growth of the fish. For example, in the farming of salmon 6 or 7 different pellet sizes are needed when using the existing fish feeds. Commonly, pellet sizes of 1.5, 2, 3. 4, 6, 9, and 12 mm diameter have been used. The length of the cylindrical pellet is usually 1.5 times their diameter.

The preparation of the present, cylindrical pellets requires a particular die for each feed pellet size. Changing the die is a cumbersome operation step, taking up to 30 minutes to accomplish. During the changing operation the extruder gets time to cool down and the dryer and cooler which are parts of the production line get time to be emptied. For these reasons, non-usable feed material will be thrown away at the beginning and at the end of each manufacturing batch, which material must not become admixed with correct feed material. It is to be understood that any change of feed pellet size takes at least two hours from the effective production time.

Moreover, a cylindrical feed pellet descends in water straight downwardly, and at a comparativey fast rate.

The object of the present invention is to eliminate these drawbacks mentioned in the foregoing.

The object of the present invention is, in particular, to bring forth a new method for manufacturing fish feed pellets owing to which such feed production will be speeded up and production efficiency will be improved, compared with prior art.

A further object of the present invention is to disclose a novel pelleted fish feed, which due to the novel shape of the feed pellets the operation steps of the feed production can be carried out faster and more efficient than prior and the need for different feed pellet sizes that have been used in fish farming becomes less than earlier, and that superior results are achieved in feeding compared with those heretofore recorded.

In addition the object of the present invention is to disclose an equipment for pelleting fish feed by means of which the production of fish feed can be simplified.

### Disclosure of the present invention

It has now surspringly been shown possible to be able to meet the above mentioned demands by the present invention, which is characterized in that the feed raw material mixture is shaped into a continuous string having a cross-section of substantially elongated shape.

Regarding the further features characterizing the present invention reference is hereby made to the claims.

In the method according to the present invention the feed raw material mixture is formed to have the shape of a continuous string having a cross-section of substantially elongated shape. When the continuous string thus obtained is cut into pieces and the resulting pieces are further processed, feed pellets are obtained which are substantially flat compared to the cylindrical feed pellets of the prior art.

In a subsequent process step the cut pieces are dried and cooled and they are preferably impregnated with fat according to the method of preparing fish feed pellets known in the prior art . The resulting product may finally be transferred to a finishing step, known per se, for preparing the ultimate feed product.

The equipment of the present invention comprises a press part provided with a die for forcing the feed raw material mixture through said die in the form of a continuous string, and a cutting station e.g. with rotating knives, for cutting the string thus formed, into pieces of a desired length. The perforations of the die are elongated as to their form, whereby the continuous string that has been formed obtains its proper shape as it is forced through said perforations.

The perforations of the die are preferably oval in shape, but they may have any elongated, symmetric or asymmetric, regular or irregular shape, e.g. taking a rectangular form.

According to one embodiment of the present invention the press part consists for instance, of an extruder commonly known per se in the art, and the cutting station consists for instance, in accordance with common practise in the field, of a cutter device arranged in continuation of the press part in conjunction with the matrix and provided with at least one rotation knife affixed to a hub. The press and cutter parts may equally be arranged in any other suitable way.

The invention further relates to a fish feed pellet prepared by a method, and comprising a die, according to the present invention, whereby the feed pellet is characterized in that its cross-section perpendicular to the pressing direction of the feed pellets is substantially elongated as to its shape.

Surprising, and unexpected advantages are achieved with the novel cross sectional shape of the fish feed pellets disclosed by the present invention, compared to the cylindrical cross-section of the prior art. When a very short piece, pellet, is cut from the continuous string formed as disclosed by the present invention and processed to a feed pellet, even a small fish in the mouth of which the feed pellet would not fit if directed transversally to the pressing direction, will be able to swallow such a pellet which is thin and flat in the pressing direction. The elongated cross-section of the continuous string formed as disclosed by the present invention can be kept comparatively large already at those feed pellets meant for smaller fish. On the other hand, due to the invention, this same cross-sectional size is appropriate to be used in feed pellets meant for larger fish as well. It is thus an advantage of the present invention that, from one and the same continuous string, several different pellet sizes can be produced, that is, one cross-sectional size is appropriate to be used in the preparation of different sizes of pellets.

In one embodiment of the present invention, said shorter diameter or cross length of the cross-section of the pellets, is 1 to 10 mm, while the longer diameter or length is 1 to 20 times the shorter cross length. A feed pellet size like this is appropriate, depending on the length in the pressing direction of the pellet, e.g., for use in the farming of different-sized salmon fish. The length of the pellets of the present invention in the pressing direction may be in the order of 1 to 20 mm.

In accordance with the invention several different pellet sizes can be produced using one die only, e.g., 2 to 5 or even up to ten, preferably at least three different sizes by adjusting the length of the pieces that are cut from the string which is formed in the die. It is thus possible, by means of the invention, to achieve a significant reduction of the number of matrix exchanges required in fish feed production and the production stops, which these exchanges entail.

The length of the pieces can be adjusted when a cutter device known per se in the field is employed by changing the cutting rate of the device, i.e., its number of cuts per time unit, in accordance with practise known per se in this field. The speed of the cutter device can be easily controlled while the equipment is running, whereby cooling of the equipment will not take place. In a subsequent processing section of the manufacturing line, that is in the dryer and cooler, a mat is maintained as well, meaning that the production efficiency can be significantly improved by eans of the present invention compared to prior art.

Furthermore, the shape of the pellet obtained in accordance with the method of the invention also provides for advantages in the further processing of the pellets in further processing steps. If feed pellets that have been cut as disclosed by the invention, are impregnated with fat in the subsequent processing the absorption of fat is accelerated and the impreganation is made more uniform, due to the shape of cut, more or less flat pellet, compared to that of a cylindrical pellet. The shape obtained by the disclosure of the invention further provides for advantages in the drying and cooling steps, for instance the core of a flat pellet will dry out and cool faster than that of a cylindrical pellet, with the consequence that the drying operation requires a substantial less amount of energy than it does at present, and the dryer can be more conservatively dimensioned.

The feed of the present invention can be used preferably in fish farming in the same way as feed stuffs known in the art. The size of the pellet to be used is determined by the size of the fish in accordance with prior practise. Since the inventive idea of the present application lies in the novel shape of the pellet, and because various advantages are obtained by means of this shape in itself, the invention is not restricted to any specific size of the pellet. It is thus to be understood that the dimensions of the cross-section can be selected, e.g., considering the requirements imposed by the species farmed and the range of sizes of the pellet to be contemplated and the length of the pellet in the pressing direction, considering the requirements imposed by the species to be farmed and the size of the fish farmed.
It has now further been found, thanks to the shaping taught by the invention, that one single new size of pellet can replace one or more prior art sizes of pellet. For instance it is possible to replace the pellet sizes of 4, 6, and 9 mm (diameter of cylindrical pellet) previously used in the farming of salmon, with two sizes of pellets according to the invention. The reduced number of sizes of pellets according to the invention facilitates the feed production, storage and transporting, and it simplifies the feeding of the fish. Moreover, due to fewer sizes of pellet the batch sizes will become larger and the need for storage space will become less as the number of different sizes decreases.

As to its formulation the fish feed of the invention may correspond to any fish feed considered and consistent with what is known in the prior art which may be extruded by means of a die pressing. The fish feed may, for instance, contain protein in an amount of 5 to 60 % by weight, fat in an amount of 3 to 40 % by weight, carbohydrates in an amount of 0 to 50 % by weight, etc. Part of the fat is preferably absorbed in the feed pellets obtained from the pelleting apparatus, in accordance with known practise. The moisture content of the feed pellet may be 0 to 50 by weight, normally less than 10 % by weight to eliminate growth of micro-organisms.

Feed pellets according to the invention provides furthermore, due to their new shape, many advantages to be obtained relative to previous feed pellets. The flat pellet of the invention descends in water by curving sweeps. The feed pellet is thus more interesting to the fish; the fish eat more thereof, and they thrive better. Moreover, the ingestion time, i.e., the settling time of the pellets is longer than before. Furthermore, thanks to the surface area of the feed pellet of the pellet, which is larger than that of a cylindrical pellet, the enzymes in the digestive tract of the fish have immediate access to a larger feed surface, and the digestion of the feed becomnes faster. For these reasons the fish grows faster, and the feed quantity required for gaining 1 kg of incremental growth is less than using a cylindrical pellet.

The fish feed of the invention is appropriate when suitably adapted as to its composition ad size of the pellet, for any fish species or other aquatic species to be farmed. during all growth stages of the species. The following will be mentioned as examples of species to be farmed (however, no restriction as such is made to these species): salmon, rainbow trout, migratory sea trout, sea perch, flatfish, catfish, carp, eel, yellow tail and shrimps.

The invention will be described in the following more in detail with reference to the accompanying drawing, wherein:
- FIG. 1: shows schematically, an equipment set-up to be used in the manufacturing method of the invention,
- FIG. 2: shows a die plate according to the invention in a frontal view,
- FIG. 3: shows the die of FIG. 2 in a top view, and in cross-section,
- FIG. 4: shows in an enlarged scale, the die plate of FIG. 2 with its frame in cross-section, and
- FIG. 5: illustrates schematically some feed pellets according to the invention which have the same cross-section perpendicular to the pressing direction.

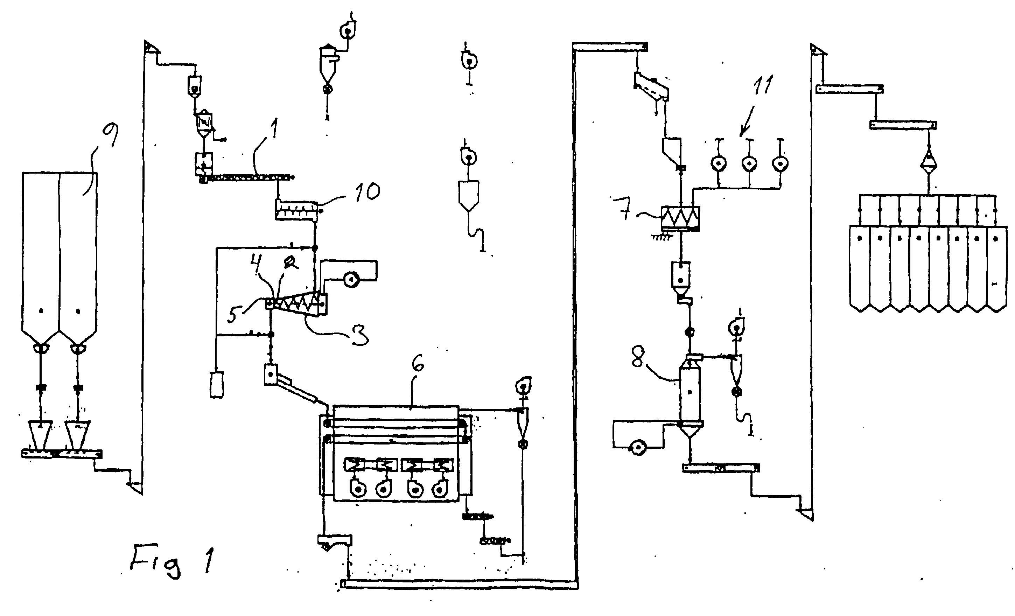

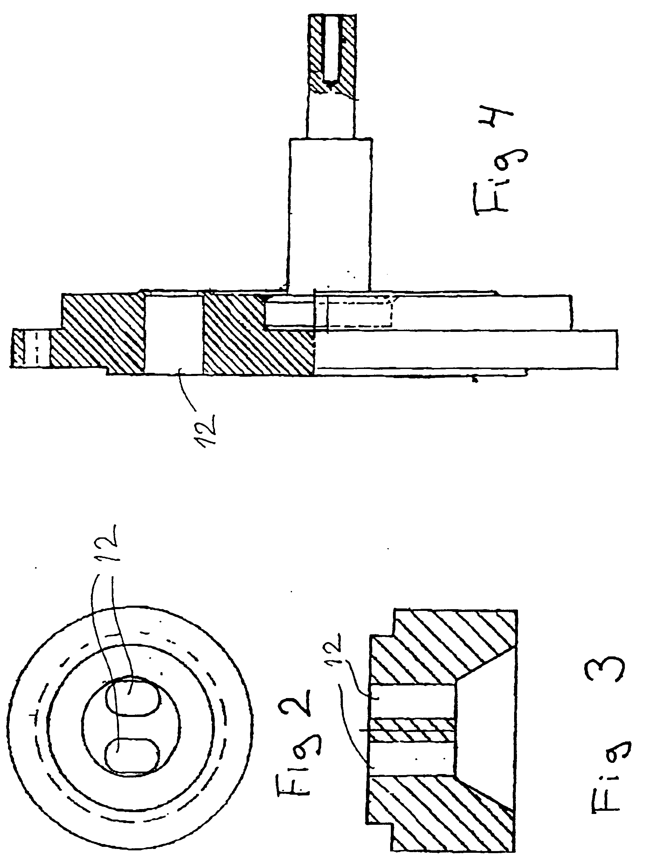

Referring to FIGs 1 and 2 a fish feed manufacturing application conforming with the invention is depicted with its apparatus equipment. In the method of the invention a brand of fish feed is produced which has a formulation known per se. The method is implemented with a set-up compirisng a feed raw material feeding unit 1, an extruder 3, a dryer 6, a cooler unit 8 and a fat application unit 7. The apparatus further includes auxiliary devices and specific apparatuses for transporting as well as packaging.

The extruder 3 of the invention comprises, in accordance with prior art , a press part 2 and a cutter part 5. The press part 2 consists, in the present case, of a known extruder provided with a die 4 according to the invention. The cutter part 5 consists of a cutter device known in the art, disposed in continuation of the press part 2, subsequent to the matrix 4 and being provided with at least one knife blade connected to a hub and rotating against the die plate (FIG. 2), this blade cutting off the string emerging through the die to yield a pellet of the desired length, which length is depending on the rotational speed rate of the blade.

The die plate (FIG. 2) is provided with a plurality of holes 12, or nozzles, conforming with the invention and which perforations have an oval shape so that the shorter diameter, or cross-sectional length, is, in the present embodiment, 1 to 15 mm, e.g. about 3 mm, and the longer diameter, or cross-sectional length in the same embodiment is 5 to 20 mm, e.g., about 9 mm.

During operation, the feed raw materials are fed from raw material silos 9 into the desired proportions to the extruder 3. The raw materials may be supplied in the form of a ready-made mixture, or they may be combined with each other only in a power mixer 10 and/or in the extruder 3. In the extruder 3 the mixture is pressed, under pressure, and preferably under heating, in a manner known per se, through the perforations of the die 4 to form a continuous string having an oval cross-section. The continuous string which is thus formed, is cut into the desired lengths by adjustment of the speed rate of the cutting unit 5. In the embodiment three different feed pellets are produced with one die in such a way that the feed raw material mixture emerging from the matrix in the form of a continuous string is first cut into pieces having a length of about 4 mm. When the desired production quantity has been fulfilled, the speed rate of the cutter unit 5 is reduced while the extruder 3 is operating so that the formed, continuous string is cut into pieces having a length of about 6 mm. Subsequent to this pellet size batch, the speed rate of the cutter unit may be further lowered once more without stopping the operation of the extruder 3 so as to yield pieces having a length of about 12 mm obtained from the continuous string. Generally, the length of the feed pellets which are cut is not limited to those mentioned. Moreover, it is further possible to produce a still greater number of pellet sizes using one matrix.

The cut-off pieces, the pellets, are conveyed to the dryer 6 and then to an after-fattening unit 7, in which the pieces are furthermore impregnated with fat, e.g., using a fish or vegetabilic oil, 5 to 25 % by weight. The fat is brought into contact with the pieces from a fat feeding member 11 arranged in conjunction with the after-fattening unit 7. The fat impregnation step is partly carried out already before and during cooling of the pellets, but may equally well be done afterwards, in accordance with known practise.

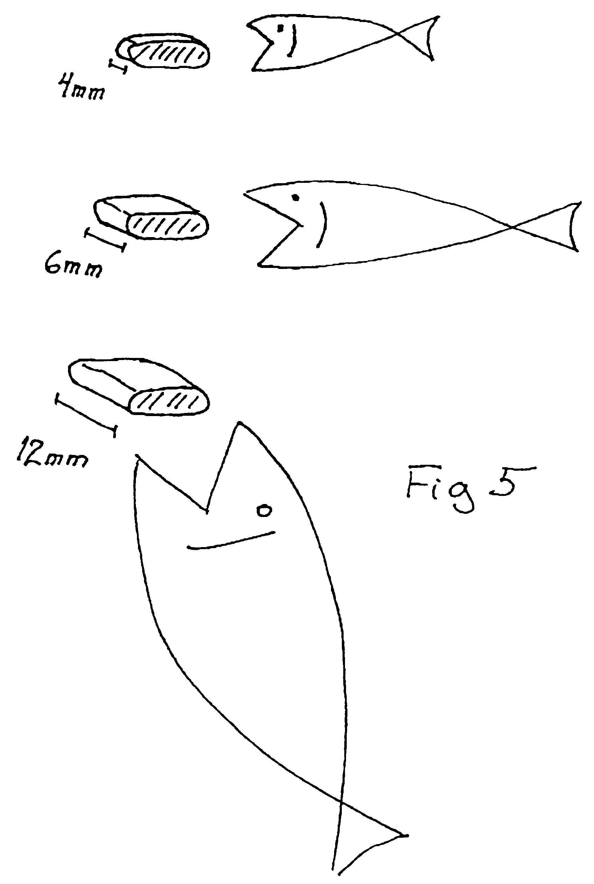

FIG. 5 illustrates schematically the appropriateness of the feed pellets thus obtained, in the feeding of fishes of various sizes, e.g., of salmonids. The figure reveals the direction in which the feed pellet is swallowed in the case of fish of various sizes. A small ad medium-sized fish will swallow the feed pellet of the invention in an orientation which is perpendicular to the pressing direction. A large fish will swallow the feed pellet in the direction of pressing.
The purpose of the embodying examples given is merely to illustrate the invention.

## Claims

1. A method for producing fish feed pellets, wherein the feed raw materials are mixed together; the resulting mixture is pressed through a perforated die in the form of a continuous string, and from said string pieces having a desired length are cut, and the pieces thus obtained are further processed in order to obatin a pelleted fish feed product, **characterized** in that the feed raw material mixture is shaped into a continuous string having a cross-section of substantially elongated shape.

2. Method according to claim 1, **characterized** in that the mixture is pressed through perforations having substantially elongated shape.

3. Method according to claim 1 or 2, **characterized** in that the mixture is pressed through oval perforations.

4. Method according to anyone of claims 1-3, **characterized** in that one and the same die is used for producing several different sizes of pellets, which sizes are determined in accordance with the size of the fish to be fed, the size of the pellet being changed by adjusting the length of the pieces to be cut.

5. Method according to anyone of claims 1-4, **characterized** in that the shorter diameter, the shorter cross length, of the cross-section of the string which is formed is 1 to 10 mm and that the longer diameter, the longer cross length, is 1 to 20 times the shorter diameter.

6. Method according to anyone of claims 1-5, **characterized** in that the feed raw material mixture is forced through a matrix and that pieces are cut from the string thus formed, which pieces have a length of 1 to 20 mm in order to obtain the desired size of feed pellet.

7. Method according to anyone of claims 1-6, **characterized** in that the pieces cut are dried and/or cooled and impregnated with fat.

8. A fish feed pellet produced by forcing a feed raw material mixture through a perforated die to provide a continuous string and by cutting said string into pieces of a desired length and by further processing the said pieces thus obtained in order to obtain a pelleted fish feed product, **characterized** in that the cross-section of the fedd pellets perpendicular to the pressing direction has a substantially elongated shape.

9. Fish feed according to claim 8, **characterized** in that said cross-section of the pellet is oval in shape.

10. Fish feed according to claim 8 or 9, **characterized** in that in several different feed pellet size classes, the dimension of the cross-section of the pellet is mutually consistent and that the lengths in the pressing direction of the pellet vary in accordance with the size classes.

11. Fish feed according to anyone of claims 8-10, **characterized** in that the shorter diameter of the cross-section of the pellet is 1 to 10 mm and that the longer diameter of the cross-section of the pellet is 1 to 20 times the shorter diameter.

12. Fish feed according to anyone of claims 8-11, **characterized** in that the lngth of the pellet in the pressing direction is of the order of 1 to 20 mm.

13. Fish feed according to anyone of claims 8-12, **characterized** in that the fish feed pellet has been impregnated with fat.

14. Apparatus for pelleting fish feed, comprising a press part (2) provided with perforated die (4) for pressing fish feed raw material through the perforations of the die to form a continuous string, and a cutter device (5) for cutting the string thus formed into pieces having a desired length, **characterized** in that the perforations (12) of the die (4) have an elongated shape.

15. Apparatus according to claim 14, **characterized** in that the shorter diameter of the perforations (12) of the die (4) is 1 to 10 mm and that the longer diameter is 1 to 20 times the shorter diameter.

16. Apparatus according to claim 14 or 15, **characterized** in that the perforations (12) of the die (4) have an oval shape.

17. Apparatus according to anyone of claims 14-16, **characterized** in that the press part (2) consists of an extruder (3) and that the cutter device (5) consists of a cutter device arranged subsequent to the press part in conjunction with the die (4) and is provided with at least one rotating knife connected to a hub.

## Patentansprüche

1. Ein Verfahren zur Herstellung von Fischfutterpellets, bei dem Futterrohstoffe zusammengemischt werden, die daraus entstehende Mischung durch einen gelochten Stempel in der Form einer Endlosschnur gepreßt wird und Stücke mit der erwünschten Länge von der Schnur abgeschnitten werden und die so erhaltenen Stücke weiter bearbeitet werden, um ein pelletiertes Fischfutterprodukt zu ergeben, dadurch gekennzeichnet, daß die Futterrohstoffmischung zu einer Endlosschnur mit einem im wesentlichen länglichen Querschnitt geformt wird.

2. Verfahren gemäß Anspruch 1, dadurch gekennzeichnet, daß die Mischung durch Lochungen gepreßt wird, die im wesentlichen länglich sind.

3. Verfahren gemäß Anspruch 1 oder 2, dadurch gekennzeichnet, daß die Mischung durch ovale Lochungen gepreßt wird.

4. Verfahren gemäß einem der Ansprüche 1-3, dadurch gekennzeichnet, daß ein und derselbe Stempel zur Herstellung von Pellets unterschiedlicher Größe verwendet wird, wobei die Größe gemäß der Größe des zu fütternden Fisches bestimmt wird und die Größe der Pellets verändert wird, indem die Länge der zu schneidenden Stücke verstellt wird.

5. Verfahren gemäß einem der Ansprüche 1-4, dadurch gekennzeichnet, daß der kleinere Durchmesser, die kürzere Querschnittlänge, des Querschnitts der gebildeten Schnur 1 bis 10 mm groß ist und daß der größere Durchmesser, die längere Querschnittlänge, 1 bis 20 Mal der kleinere Durchmesser ist.

6. Verfahren gemäß einem der Ansprüche 1-5, dadurch gekennzeichnet, daß die Futterrohstoffmischung durch eine Matrix gezwängt wird und daß 1 bis 20 mm lange Stücke von der so geformten Schnur geschnitten werden, um die erwünschte Futterpelletgröße zu ergeben.

7. Verfahren gemäß einem der Ansprüche 1-6, dadurch gekennzeichnet, daß die abgeschnittenen Stücke getrocknet und/oder abgekühlt und mit Fett durchtränkt werden.

8. Ein Fischfutterpellet, das hergestellt wird, indem eine Futterrohstoffmischung durch einen gelochten Stempel gezwängt wird, um eine Endlosschnur zu ergeben, und die Schnur in Stücke mit einer erwünschten Länge geschnitten wird und indem diese so erhaltenen Stücke weiter bearbeitet werden, um ein pelletiertes Fischfutterprodukt zu ergeben, dadurch gekennzeichnet, daß der Querschnitt der Futterpellets senkrecht zur Preßrichtung im wesentlichen länglich ist.

9. Fischfutter gemäß Anspruch 8, dadurch gekennzeichnet, daß der Querschnitt des Pellets oval ist.

10. Fischfutter gemäß Anspruch 8 oder 9, dadurch gekennzeichnet, daß bei den verschiedenen Größenklassen der Futterpellets der Querschnitt der Pellets jeweils gleich groß ist und daß die Länge der Pellets gemäß der Größenklasse in die Preßrichtung verschieden ist.

11. Fischfutter gemäß einem der Ansprüche 8-10, dadurch gekennzeichnet, daß der kleinere Durchmesser des Pelletquerschnitts 1 bis 10 mm beträgt und daß der größere Durchmesser des Pelletquerschnitts 1 bis 20 Mal der kleinere Durchmesser ist.

12. Fischfutter gemäß einem der Ansprüche 8-11, dadurch gekennzeichnet, daß das Pellet in die Preßrichtung um die 1 bis 20 mm lang ist.

13. Fischfutter gemäß einem der Ansprüche 8-12, dadurch gekennzeichnet, daß das Fischfutterpellet mit Fett durchtränkt worden ist.

14. Vorrichtung zum Pelletieren von Fischfutter bestehend aus einem Preßteil (2) mit einem gelochten Stempel (4) zum Durchpressen des Fischfutterrohstoffs durch die Lochungen des Stempels, um eine Endlosschnur zu bilden, und einer Schneidevorrichtung (5), um die so gebildete Schnur in Stücke mit einer erwünschten Länge zu schneiden, dadurch gekennzeichnet, daß die Lochungen (12) des Stempels (4) länglich sind.

15. Vorrichtung gemäß Anspruch 14, dadurch gekennzeichnet, daß der kleinere Durchmesser der Lochungen (12) des Stempels (4) 1 bis 10 mm beträgt und daß der größere Durchmesser 1 bis 20 Mal der kleinere Durchmesser ist.

16. Vorrichtung gemäß Anspruch 14 oder 15, dadurch gekennzeichnet, daß die Lochungen (12) des Stempels (4) oval sind.

17. Vorrichtung gemäß einem der Ansprüche 14-16, dadurch gekennzeichnet, daß der Preßteil (2) aus einem Extruder (3) besteht und daß die Schneidevorrichtung (5) aus einer Schneidevorrichtung besteht, die nach dem Preßteil und mit dem Stempel (4) angeordnet ist und mit zumindest einem mit einem Einsenkstempel verbundenen Drehmesser ausgestattet ist.

## Revendications

1. Un procédé de production de boulettes de nourriture pour poissons, dans lequel les matières premières alimentaires sont mélangées les unes aux autres : le mélange qui en résulte est pressé en forme de chaîne continue au travers d'un moule perforé, et des morceaux ayant une longueur souhaitée sont coupés dans ladite chaîne, et les morceaux ainsi obtenus sont traités plus avant afin d'obtenir un produit alimentaire en boulettes pour poissons, caractérisé en ce que le mélange de matière première alimentaire est formé en une chaîne continue présentant une coupe transversale de forme sensiblement allongée.

2. Procédé selon la revendication 1, caractérisé en ce que le mélange est pressé au travers de perforations ayant une forme sensiblement allongée.

3. Procédé selon la revendication 1 ou 2, caractérisé en ce que le mélange est pressé au travers de perforations ovales.

4. Procédé selon une quelconque des revendications 1 à 3, caractérisé en ce qu'un seul et même moule est utilisé pour produire des boulettes de plusieurs tailles différentes, lesquelles tailles sont déterminées en fonction de la taille du poisson à nourrir, la taille de la boulette étant modifiée en réglant la longueur des morceaux à couper.

5. Procédé selon une quelconque des revendications 1 à 4, caractérisé en ce que le plus petit diamètre, la plus petite longueur transversale, de la coupe transversale de la chaîne qui est formée est de 1 à 10 mm et en ce que le plus long diamètre, la plus grande longueur transversale, est de 1 à 20 fois le diamètre le plus court.

6. Procédé selon une quelconque des revendications 1 à 5, caractérisé en ce que le mélange de matière première alimentaire est poussé au travers d'un moule et que des morceaux sont coupés dans la chaîne ainsi formée, lesquels morceaux ont une longueur de 1 à 20 mm de façon à obtenir la taille souhaitée de boulette de nourriture.

7. Procédé selon une quelconque des revendications 1 à 6, caractérisé en ce que les morceaux coupés sont séchés et/ou refroidis et imprégnés de graisse.

8. Une boulette de nourriture pour poissons produite en poussant un mélange de matière première alimentaire au travers d'un moule perforé pour produire une chaîne continue et en coupant ladite chaîne en morceaux d'une longueur souhaitée et en traitant plus avant lesdits morceaux ainsi obtenus de façon à obtenir un produit alimentaire en boulettes pour poissons, caractérisé en ce que la coupe transversale des boulettes de nourriture perpendiculaire au sens selon lequel elles sont pressées présente une forme sensiblement allongée.

9. Aliments pour poissons selon la revendication 8, caractérisés en ce que ladite coupe transversale de la boulette est de forme ovale.

10. Aliments pour poissons selon la revendication 8 ou 9, caractérisés en ce que dans plusieurs catégories de tailles de boulettes de nourriture différentes, la dimension de la coupe transversale de la boulette est mutuellement constante et en ce que les longueurs dans le sens où la boulette est pressée varient selon les catégories de tailles.

11. Aliments pour poissons selon une quelconque des revendications 8 à 10, caractérisés en ce que le plus court diamètre de la coupe transversale de la boulette est de 1 à 10 mm et en ce que le plus long diamètre de la coupe transversale de la boulette est de 1 à 20 fois plus grand que le plus court diamètre.

12. Aliments pour poissons selon une quelconque des revendications 8 à 11, caractérisés en ce que la longueur de la boulette dans le sens où elle est pressée est de l'ordre de 1 à 20 mm.

13. Aliments pour poissons selon une quelconque des revendications 8 à 12, caractérisés en ce que la boulette de nourriture pour poissons a été imprégnée de graisse.

14. Appareil pour mettre des aliments pour poissons en boulettes, comprenant une partie de presse (2) équipée d'un moule perforé (4) pour presser la matière première alimentaire pour poissons au travers des perforations du moule pour former une chaîne continue, et un dispositif de coupe (5) pour couper la chaîne ainsi formée en morceaux ayant une longueur souhaitée, caractérisé en ce que les perforations (12) du moule (4) ont une forme allongée.

15. Appareil selon la revendication 14, caractérisé en ce que le plus court diamètre des perforations (12) du moule (4) est de 1 à 10 mm et que le plus long diamètre est de 1 à 20 fois le plus court diamètre.

16. Appareil selon la revendication 14 ou 15, caractérisé en ce que les perforations (12) du moule (4) ont une forme ovale.

17. Appareil selon une quelconque des revendications 14 à 16, caractérisé en ce que la partie de presse (2) consiste en une extrudeuse (3) et en ce que le dispositif de coupe (5) consiste en un dispositif de coupe disposé à la suite de la partie de presse conjointement avec le moule (4) et est pourvu d'au moins un couteau rotatif relié à un moyeu.
